# EUROPEAN PATENT SPECIFICATION

(11) **EP 0 490 601 B1**
(45) Date of publication and mention of the grant of the patent: **17.04.1996**
(21) Application number: 91311407.0
(22) Date of filing: 09.12.1991
(51) Int. Cl.: G06K 7/10, G06K 7/14

(54) **Optical scanning apparatus for reading coded symbols**
Optischer Abtastapparat zum Lesen von verschlüsselten Symbolen
Appareil d'exploration optique pour lire des symboles codés

(30) Priority: 10.12.1990 US 625257
(43) Date of publication of application: 17.06.1992
(73) Proprietor: NCR INTERNATIONAL INC., Dayton, Ohio 45479 (US)
(72) Inventor: Wike, Charles Kenneth, Jr., Cambridge, Ohio 43725 (US); Lindacher, Joseph Michael, Cambridge, Ohio 43725 (US)
(74) Representative: Robinson, Robert George

(56) References cited:
- EP-A- 0 036 781
- EP-A- 0 425 274
- US-A- 4 736 096

## Description

The present invention relates to an optical scanning apparatus and more particularly to a portable coded symbol scanning apparatus which can be operated in a hand-held mode or a fixed hands-free mode.

In present-day merchandising point-of-sale operations, data pertaining to the purchase of a merchandise item is obtained by reading encoded indicia such as a bar code label printed on or attached to the merchandise item. In order to standardize the bar codes used in various point-of-sales checkout systems, the grocery industry has adopted a uniform product code (UPC) which is in the form of a bar code. Reading systems which have been constructed to read this type of bar code include hand-held optical scanners which are moved across the bar code and stationary optical scanners normally located within the cabinet structure of a checkout counter in which the bar code is read when a purchased merchandise item is moved across a window constituting the scanning area of the counter, which movement is part of the process of loading the item into a baggage cart. Where the merchandise consists of soft materials such as clothing, hand-held scanners were found to be ineffective under certain circumstances. A need has arisen for a bar code scanning device that combines the advantages of both a hand-held, as well as a fixed, hands-free scanner. Such an arrangement is described in US-A-4,766,297 which discloses a scanning device that can be utilized in either a portable mode of operation or a stationary mode of operation. The scanning device includes a portable hand-held scanner and a fixture for receiving and supporting the scanner. The fixture includes a base portion and a hand portion interconnected in a spaced apart relationship. When the hand-held scanner is attached to the fixture, it can be operated as a fixed, overhead scanning apparatus. A disadvantage of overhead scanners is that it is sometimes difficult to get a valid read, in particular when scanning code labels attached to soft materials. Also, the lifting of articles to bring them into focus in relation to scanning light beams may sometimes be uncomfortable.

EP-A-0425274, which constitutes prior art for novelty purposes only under Article 54(3)EPC, discloses a support unit and a detachably mountable hand held bar code scanner. The scanner can be used when mounted in the support unit because the support unit contains a reading window through which the light emitted by the scanner is transmitted. The scanner will be used in this mode when objects to be scanned are small and light and may be passed over the reading window by the user. The scanner can also be used when removed from the support unit, in order to scan heavy or large objects. The support structure further includes mirror means, and holding means for holding the scanner so that, in operation, scanning beams from the scanning device are reflected from the mirror means out of the support structure through the reading window. The reading window lies in the depth of field of the scanner when held in the support structure by the holding means.

An object of the present invention is to provide a scanning apparatus having a scanning window which can be positioned to allow for hand-free scanning of a bar code label in a plurality of scanning positions.

Thus, according to the invention, there is provided an optical scanning apparatus for reading coded symbols, including a source of light beams, and support means for supporting said source, housing means including mirror means and an exterior transparent plate, said housing means and mirror means being rotatably mounted on said support means whereby, in operation, scanning beams from said source are reflected from said mirror means out of said housing means through said transparent plate, said transparent plate lying within the depth of field of said source, and rotation of said housing means relative to said support means serving to change the position of said transparent plate relative to said support means.

The invention will now be described by way of example with reference to the accompanying drawings wherein like reference numerals indicate like or corresponding parts throughout the several views and wherein:
Fig. 1 is a side view of the portable optical bar code scanning apparatus of the present invention showing the location of the hand-held scanner on a support member and a housing member on a support member with the housing member orientated in a forward direction;

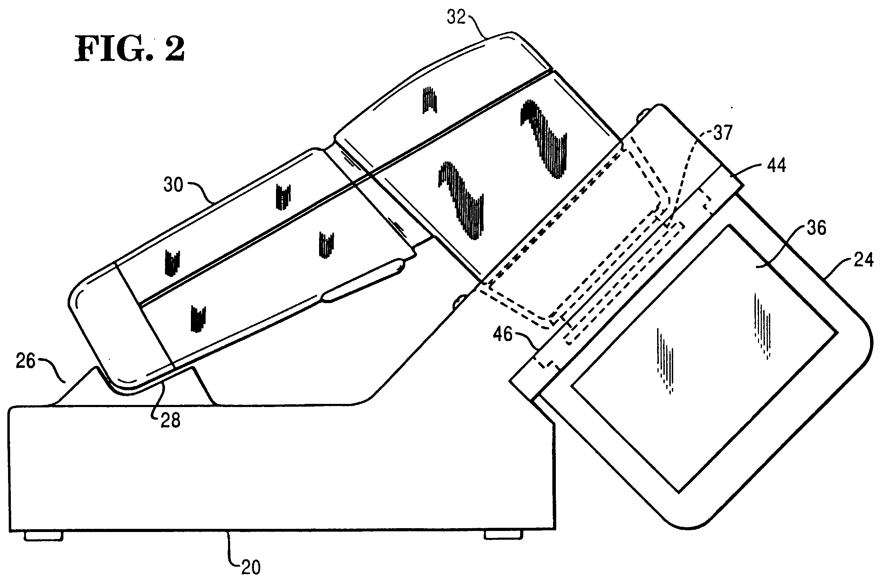

Fig. 2 is a side view of the portable bar code scanning apparatus of the present invention which is similar to Fig. 1 showing the housing member rotated ninety degrees enabling a scanning operation to occur on the side of the scanning apparatus;
Fig. 3 is a top view of the portable bar code scanning apparatus of the present invention;
Fig. 4 is a sectional view taken on line 4-4 of Fig. 3;
Fig. 5 is a side partial exploded view of the portable bar code scanning apparatus of the present invention;
Fig. 6 is an end view of the housing member taken on line 6-6 of Fig. 5; and
Fig. 7 is a rear right side perspective view of the housing member.

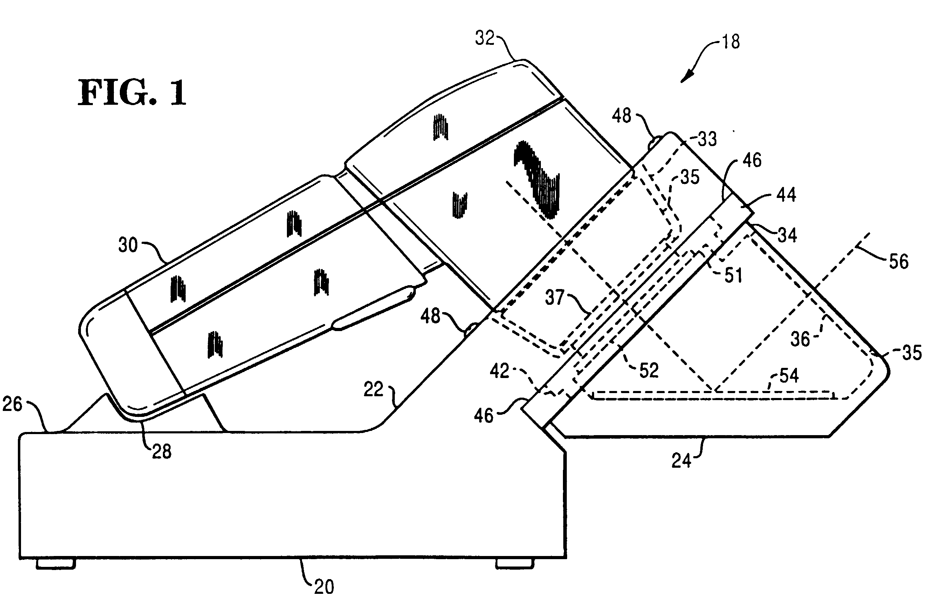

Referring now to Fig. 1, there is shown a side view of the bar code scanning apparatus of the present invention generally indicated by the numeral 18 comprising a support member 20 having a sloping portion 22 to which is rotatably mounted a housing member 24. The support member 20 includes an end portion 26 having a cut-out portion 28 which accommodates the handle portion 30 of a hand-held bar code optical scanner 32. The sloping portion 22 includes a recessed portion 33 to accommodate the head portion 35 of the scanner 32.

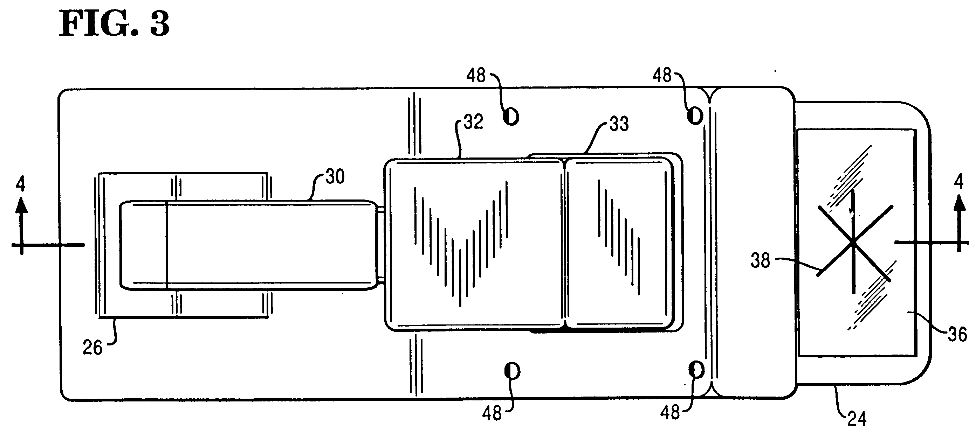

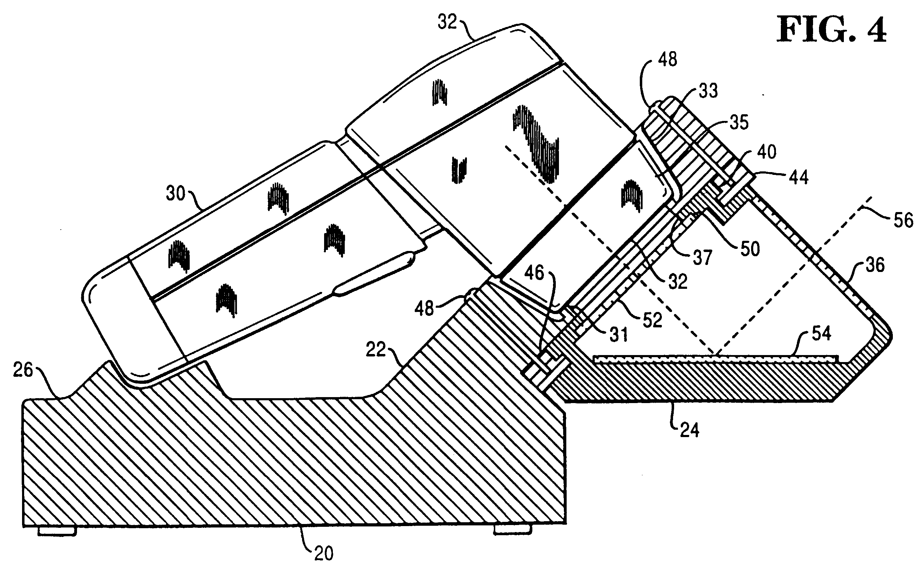

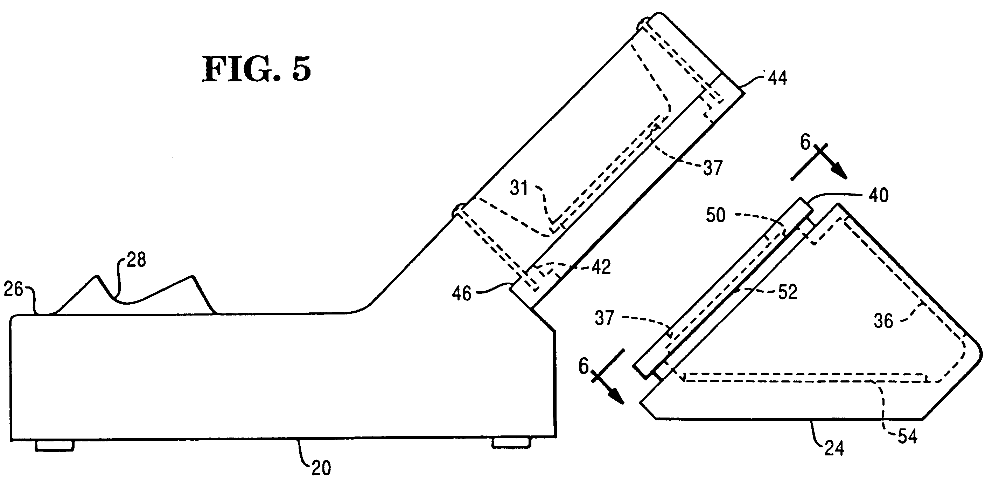

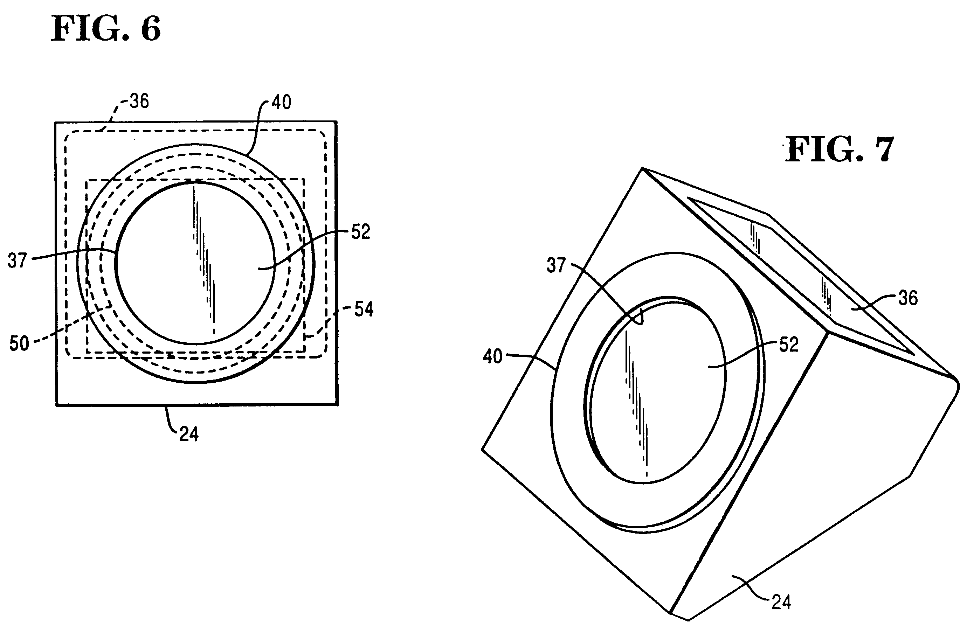

The housing member 24 includes a sloping front surface 34 having a recessed portion 33 in which is mounted a transparent exit plate 36 on which is focused a scanning pattern 38 (Fig. 3) generated by the hand-held bar code scanner 32. The housing member 24 further includes a rear circular flange bearing portion 40 portion (Fig. 5) which is rotatably mounted within the circular recessed socket portion 42 (Fig. 5) of a collar member 44. The collar member 44 is secured to the lower surface 46 of the support member 20 by any type of fastening means such as screw members 48 (Fig. 4). The bearing portion 40 further includes a recessed portion 50 (Figs. 4-6 inclusive) within which is mounted a sealed transparent entrance plate 52 such as a glass window.

Mounted on the floor of the housing member 24 is a mirror member 54 (Fig. 4) which reflects scanning light beams generated by the hand-held scanner 32 along a beam axis 56. The scanning light beams in the form of the scanning pattern 38 (Fig. 3) are reflected from the mirror member 54 to be focused on the surface of the transparent exit plate 36 enabling the operator to position the bar code label which is to be scanned adjacent the scanning pattern. The substrate 36 is preferably constructed of a transparent material such as water white glass which will display the multi-line scanning pattern 38 projected by the bar code scanner 32 enabling the operator to easily align the bar code label on the scanning pattern.

In the operation of the bar code scanning device 18, the operator will mount the handle portion 30 of the hand-held scanner 32 within the cutout portion 28 (Fig. 1) of the support member 20. The operator will then position the front face portion (Fig. 4) of the scanner 32 on a plastic insert 31 mounted adjacent an aperture 37 (Figs. 4-7 inclusive) in the collar member 44 adjacent the recessed portion 33 in the support member 20, and will turn on the scanner. This projects the scanning light beams forming the scanning pattern 38 along the beam axis 56 (Figs 1 and 4) which is projected through the entrance plate 52 onto the reflecting mirror member 54 from where the light beams are focused on the exit plate 36. In scanning a bar code label, the label is positioned on the surface of the plate 36 and moved across the scan pattern 38 for reading the bar code label in a manner that is well known in the art. Where the space at the checkout station prevents the scanning of the bar code label with the housing member 24 orientated as shown in Fig. 1, the operator will rotate the housing member through any angle up to one hundred and eighty degrees to facilitate the scanning of the bar code label. While there has been disclosed the use of the plates 36 and 52, it is obvious the scanning device of the present invention will still operate for its intended purpose if the plates are not incorporated into the structure.

It will be seen from this construction that a checkout operator can adjust the position of the housing member to conveniently move the bar code label past the scanning device utilizing both hands to grasp the article on which the bar code label is attached.

## Claims

1. An optical scanning apparatus for reading coded symbols, including a source (32) of scanning light beams, and support means (20) for supporting said source, housing means (24) including mirror means (54) and an exterior transparent plate (36), said housing means (24) and mirror means (54) being rotatably mounted on said support means (20) so as to be rotatable together whereby, in operation, scanning beams from said source (32) are reflected from said mirror means (54) out of said housing means (24) through said transparent plate (36), said transparent plate lying within the depth of field of said source (32), and rotation of said housing means (24) relative to said support means (20) serving to change the position of said transparent plate relative to said support means (20).

2. An apparatus according to claim 1, characterized in that said source (32) of scanning light beams is a hand-held scanning device.

3. An apparatus according to either claim 1 or 2, characterized in that said support means (20) includes a recessed socket portion (42) and said housing means (24) includes a circular flange portion (40) mounted within said socket portion (42) to enable said housing means (24) to be rotated on said support means (20).

4. An apparatus according to either claims 2 or 3, characterized in that said hand-held scanning device (32) has a nose portion (35) and in that said support means (20) has a recessed portion (33) shaped to accommodate said nose portion (35).

5. An apparatus according to claim 4, characterized in that said recessed portion (33) has an aperture (37) therein through which said scanning light beams are projected.

6. An apparatus according to claim 5, characterized by a second transparent plate (52) mounted in said aperture (37).

7. An apparatus according to claim 6, characterized in that said exterior transparent plate (36) is a water white glass window, and said second transparent plate (52) is a glass window.

8. An apparatus according to any one of the preceding claims 2 to 7, characterized in that said support means (20) has an extending base portion (26) including a cut-out portion (28) to accommodate part of a handle (30) of said hand-held scanning device (32).

9. An apparatus according to any one of the preceding claims, characterized in that said scanning light beams (38) are projected on to said mirror means (54) at an angle of 45 degrees.

10. An apparatus according to any one of the preceding claims, characterized in that said support means (20) is portable.

## Patentansprüche

1. Optischer Abtastapparat zum Lesen von verschlüsselten Symbolen, mit einer Abtastlichtstrahlen-Quelle (32) und einer Abstützvorrichtung (20) zum Abstützen der Quelle, einer Gehäuseeinrichtung (24) mit einer Spiegeleinrichtung (54) und einer lichtdurchlässigen Außenplatte (36), wobei die Gehäuseeinrichtung (24) und die Spiegeleinrichtung (54) so auf der Abstützvorrichtung (20) drehbar gelagert sind, daß sie zusammen drehbar sind, wodurch im Betrieb von der Quelle (32) ausgehende Abtaststrahlen von der Spiegeleinrichtung (54) durch die lichtdurchlässige Platte (36) hindurch aus der Gehäuseeinrichtung (24) herausreflektiert werden, wobei die lichtdurchlässige Platte innerhalb der Schärfentiefe der Quelle (32) liegt, und die Drehung der Gehäuseeinrichtung (24) bezüglich der Abstützvorrichtung (20) dazu dient, die Stellung der lichtdurchlässigen Platte bezüglich der Abstützvorrichtung (20) zu verändern.

2. Apparat nach Anspruch 1, dadurch gekennzeichnet, daß die Abtastlichtstrahlen-Quelle (32) eine handgeführte Abtastvorrichtung ist.

3. Apparat nach einem der Ansprüche 1 oder 2, dadurch gekennzeichnet, daß die Abstützvorrichtung (20) einen vertieften Einsteckabschnitt (42) aufweist und die Gehäuseeinrichtung (24) einen kreisförmigen Flanschabschnitt (40) aufweist, der in den Einsteckabschnitt (42) eingesteckt ist, um eine Drehung der Gehäuseeinrichtung (24) auf der Abstützvorrichtung (20) zu ermöglichen.

4. Apparat nach einem der Ansprüche 2 oder 3, dadurch gekennzeichnet, daß die handgeführte Abtastvorrichtung (32) einen vorspringenden Abschnitt (35) aufweist und die Abstützvorrichtung (20) einen vertieften Abschnitt (33) aufweist, der zur Aufnahme des vorspringenden Abschnitts (35) ausgeformt ist.

5. Apparat nach Anspruch 4, dadurch gekennzeichnet, daß in dem vertieften Abschnitt (33) eine Ausschnittöffnung (37) ist, durch welche die Abtastlichtstrahlen projiziert werden.

6. Apparat nach Anspruch 5, gekennzeichnet durch eine zweite lichtdurchlässige Platte (52), die in der Ausschnittöffnung (37) befestigt ist.

7. Apparat nach Anspruch 6, dadurch gekennzeichnet, daß die lichtdurchlässige Außenplatte (36) ein wasserhelles Glasfenster ist und die zweite lichtdurchlässige Platte (52) ein Glasfenster ist.

8. Apparat nach einem der vorhergehenden Ansprüche 2 bis 7, dadurch gekennzeichnet, daß die Abstützvorrichtung (20) ein verbreitertes Unterteil (26) mit einem Stufenabschnitt (28) zur Aufnahme eines Teiles eines Handgriffs (30) der handgeführten Abtastvorrichtung (32) aufweist.

9. Apparat nach einem der vorhergehenden Ansprüche, dadurch gekennzeichnet, daß die Abtastlichtstrahlen (38) in einem Winkel von 45° auf die Spiegeleinrichtung (54) projiziert werden.

10. Apparat nach einem der vorhergehenden Ansprüche, dadurch gekennzeichnet, daß die Abstützvorrichtung (20) tragbar ist.

## Revendications

1. Un appareil de balayage optique pour lire les symboles codés, comportant une source (32) de faisceaux lumineux de balayage, et un moyen de support (20) pour supporter ladite source, un moyen logement (24) comportant un moyen miroir (54) et une plaque transparente extérieure (36), lesdits moyen logement (24) et moyen miroir (54) étant montés de façon à pouvoir tourner sur ledit moyen de support (20) de façon à pouvoir tourner ensemble par quoi, lors du fonctionnement, les faisceaux de balayage de ladite source (32) sont réfléchis dudit moyen miroir (54) à partir dudit moyen logement (24) à travers ladite plaque transparente (36), ladite plaque transparente étant située dans la profondeur de champ de ladite source (32), et la rotation dudit moyen logement (24) par rapport audit moyen de support (20) servant à changer la position de ladite plaque transparente par rapport audit moyen de support (20).

2. Un appareil conformément à la revendication 1, caractérisé en ce que ladite source (32) de faisceaux lumineux de balayage est un dispositif de balayage à main.

3. Un appareil conformément à la revendication 1 ou 2, caractérisé en ce que ledit moyen de support (20) comporte une partie douille en retrait (42) et en ce que ledit moyen logement (24) comporte une partie bride circulaire (40) montée dans ladite partie douille (42) pour permettre de faire tourner ledit moyen logement (24) sur ledit moyen de support (20).

4. Un appareil conformément à la revendication 2 ou 3, caractérisé en ce que ledit dispositif de balayage à main (32) a une partie nez (35) et en ce que ledit moyen de support (20) a une partie en retrait (33) formée pour recevoir ladite partie nez (35).

5. Un appareil conformément à la revendication 4, caractérisé en ce que ladite partie en retrait (33) a une ouverture (37) à travers laquelle sont projetés lesdits faisceaux lumineux de balayage.

6. Un appareil conformément à la revendication 5, caractérisé par une deuxième plaque transparente (52) montée dans ladite ouverture (37).

7. Un appareil conformément à la revendication 6, caractérisé en ce que ladite plaque transparente extérieure (36) est une fenêtre en verre blanc soluble, et en ce que ladite deuxième plaque transparente (52) est une fenêtre en verre.

8. Un appareil conformément à l'une quelconque des revendications précédentes 2 à 7, caractérisé en ce que ledit moyen de support (20) a une partie base qui s'étend (26) comportant une partie découpée (28) pour recevoir une partie d'une poignée (30) dudit dispositif de balayage à main (32).

9. Un appareil conformément à l'une quelconque des revendications précédentes, caractérisé en ce que lesdits faisceaux lumineux de balayage (38) sont projetés sur ledit moyen miroir (54) à un angle de 45 degrés.

10. Un appareil conformément à l'une quelconque des revendications précédentes, caractérisé en ce que ledit moyen de support (20) est portable.
